# EUROPÄISCHE PATENTSCHRIFT

(11) **EP 3 994 287 B1**
(45) Veröffentlichungstag und Bekanntmachung des Hinweises auf die Patenterteilung: **02.10.2024**
(21) Anmeldenummer: 20739561.7
(22) Anmeldetag: 01.07.2020
(51) Int. Cl.: C22C 19/05, C22C 1/04, C22F 1/10

(54) **VERFAHREN ZUR HERSTELLUNG EINES PULVERS AUF BASIS EINER NICKEL-BASISLEGIERUNG**
METHOD FOR PRODUCING A NICKEL BASE ALLOY POWDER
PROCÉDÉ DE FABRICATION D'UNE POUDRE À BASE D'UN ALLIAGE DE NICKEL

(30) Priorität: 05.07.2019 DE 102019118219; 26.06.2020 DE 102020116858
(43) Veröffentlichungstag der Anmeldung: 11.05.2022
(73) Patentinhaber: VDM Metals International GmbH, 58791 Werdohl (DE)
(72) Erfinder: SCHMIDT, Christina, 44879 Bochum (DE); HECKMANN, Andreas, 44267 Dortmund (DE)
(86) Internationale Anmeldenummer: PCT/DE2020/100574
(87) Internationale Veröffentlichungsnummer: WO 2021/004579

(56) Entgegenhaltungen:
- EP-B1- 1 377 690
- DE-A1- 102015 016 729

## Beschreibung

Die Erfindung betrifft ein Verfahren zur Herstellung eines Pulvers aus einer Nickel-Basislegierung.

Der WO 2015/110668 A2 ist ein Verfahren zur Herstellung von Pulvern auf Eisenbasis zu entnehmen, welche unter Zuhilfenahme einer Zentrifuge atomisiert werden, mit folgenden Verfahrensschritten:
- zu Verfügung stellen einer Legierung mit einem Schmelzpunkt oberhalb von 1040°C,
- Erschmelzen der Zusammensetzung,
- Atomisieren der geschmolzenen Zusammensetzung unter Zuhilfenahme einer Zentrifuge oder einer rotierenden Atomisiereinrichtung.

Die DE 10 2015 016 729 A offenbart ein Verfahren zur Herstellung von metallischen Halbzeugen aus einer Legierung mit mehr als 50 % Nickel, beinhaltend folgende Verfahrensschritte:
- eine Elektrode wird durch VIM erzeugt,
- die Elektrode wird in einem Ofen zur Reduzierung von Spannungen und Überalterung einer Wärmebehandlung im Temperaturbereich zwischen 400 und 1250°C für einen Zeitraum von 10 bis 336 Stunden unterzogen,
- die Elektrode wird an Luft oder im Ofen abmessungsabhängig, insbesondere durchmesserabhängig, auf eine Temperatur zwischen Raumtemperatur und kleiner 1.250°C, insbesondere kleiner 900°C, abgekühlt,
- die abgekühlte Elektrode wird anschließend durch VAR mit einer Umschmelzrate von 3,0 bis 10 kg/Minute zu einem VAR-Block umgeschmolzen,
- der VAR-Block wird in einem Ofen im Temperaturbereich zwischen 400_und 1250°C für einen Zeitraum von 10 bis 336 Stunden wärmebehandelt,
- der VAR-Block wird an Luft oder im Ofen abmessungsabhängig, insbesondere durchmesserabhängig, auf eine Temperatur zwischen Raumtemperatur und kleiner 1.250°C, insbesondere kleiner 900°C, abgekühlt,
- der VAR-Block wird erneut mit einer Umschmelzrate von 3,0 bis 10 kg/Minute umgeschmolzen,
- der umgeschmolzene VAR-Block wird einer Wärmebehandlung im Temperaturbereich zwischen 400 und 1250°C für einen Zeitraum von 10 bis 336 Stunden unterzogen,
- der VAR-Block wird anschließend durch Warm- und/oder Kaltformgebung an die gewünschte Produktform und Abmessung gebracht.

Durch die EP 1 377 690 B1 ist ein Verfahren zur Herstellung einer Superlegierung auf Nickelbasis bekannt geworden, die im Wesentlichen frei von positiver und negativer Seigerung ist, wobei das Verfahren folgendes umfasst:
- Gießen einer Legierung, die eine Superlegierung auf Nickelbasis ist in eine Gießform;
- Glühen und Überaltern der Legierung durch Erwärmen der Legierung bei mindestens 1200°F (649°C) über eine Dauer von mindestens 10 Stunden;
- Elektroschlackeumschmelzen der Legierung mit einer Schmelzrate von mindestens 8 Ibs/min (3,63 kg/min);
- Verbringen der Legierung in einen Wärmeofen innerhalb von 4 Stunden nach der vollständigen Verfestigung;
- Halten der Legierung in dem Wärmeofen bei einer ersten Temperatur von 600°C (316°C) bis 1800°F (982°C) über eine Dauer von mindestens 10 Stunden;
- Erhöhen der Ofentemperatur von der ersten Temperatur auf eine zweite Temperatur von mindestens 2125°C (1163°C) in einer solchen Weise, dass thermische Spannungen innerhalb der Legierung vermieden werden;
- Halten auf der zweiten Temperatur über eine Dauer von mindestens 10 Stunden;
- Vakuum-Lichtbogen-Umschmelzen einer VAR-Elektrode der Legierung mit einer Schmelzrate von 8 bis 11 Ibs/min (3,63 bis 5 kg/min), um einen VAR-Block herstellen.

Es ist allgemein bekannt, dass Ni- und Ni-Co-Legierungen eingesetzt werden um Bauteile mit besonderen Eigenschaften bezüglich Korrosionsbeständigkeit und guten mechanischen Eigenschaften, wie Festigkeit, Warmfestigkeit und Bruchzähigkeit, zu fertigen.

Der Erfindung liegt die Aufgabe zugrunde, ein Verfahren zur Herstellung eines Pulvers für die additive Fertigung von Komponenten bereitzustellen welches die vorteilhaften Eigenschaften der Ni- und Ni-Co-Legierungen aufweist und kostengünstig herzustellen ist. Außerdem kann oben beschriebenes Pulver bedarfsweise für die Herstellung der Bauteile mittels heißisostatischen Pressens (HIP) oder herkömmlichen Sinter- und Strangpressprozessen verwendet werden. Außerdem ist die Verfahrenskombination aus additiver Fertigung und folgender HIP Behandlung möglich. Dabei sind die unten beschriebenen für die generative Fertigung Nachbearbeitungsschritte für HIP Bauteile möglich anzuwenden. Wichtig sind dabei die besonderen Anforderungen an Verteilung der Partikelgröße, Partikelform und Rieselfähigkeit des Pulvers zu erfüllen.

Diese Aufgabe wird gelöst durch ein Verfahren zur Herstellung eines Pulvers aus einer Nickel-Basislegierung, wobei die Gehalte (in Gew.-%) wie folgt definiert sind:

| | |
|---|---|
| C | max. 0,5 % |
| S | max. 0,15 %, insbesondere max. 0,03 % |
| N | max. 0,25 % |
| Cr | 14 - 35 %, insbesondere 17 - 28 % |
| Ni | Rest (> 38 %) |
| Mn | max. 4 % |
| Si | max. 1,5 % |
| Mo | > 0 - 22 % |
| Ti | ≤ 4 %, insbesondere ≤ 3,25 % |
| Nb | bis 6,0 % |
| Cu | bis 3 %, insbesondere bis 0,5 % |
| Fe | ≤ 50 % |
| P | max. 0,05 %, insbesondere max. 0,04 % |
| AI | bis 3,15 %, insbesondere bis 2,5 % |

| | |
|---|---|
| Mg | max. 0,015 % |
| V | max. 0,6 % |
| Zr | max. 0,12 %, insbesondere max. 0,1 % |
| W | bis 4,5 %, insbesondere bis max. 3 % |
| Co | bis 28 % |
| B | ≤ 0,125 % |
| O | > 0,00001 - 0,1 % |

und herstellungsbedingte Verunreinigungen,
wobei gilt:
   Ni + Fe + Co 56 - 80 %
   Nb + Ta ≤ 6,0 %, , indem
      - eine Legierung in einem VIM-Ofen erschmolzen wird,
      - die flüssige Schmelze für 5 min bis 2 Stunden zur Homogenisierung gehalten wird,
      - eine geschlossene Verdüsungsanlage mit einem zugeführten Gas auf einen Taupunkt von -10°C bis 120°C eingestellt wird,
      - die Schmelze durch eine Düse in einen Gasstrom mit einer Gasflussrate von 2 qm³/min bis 150 qm³ geblasen wird,
      - die erstarrten Pulverpartikel in einem gasdicht verschlossenen Behälter gesammelt werden, wobei
      - die Partikel eine Partikelgröße von 5 µm bis 250 µm haben,
      - die Partikel des Pulvers sphärisch sind,
      - das Pulver Gaseinschlüsse von 0,0 bis 4 % Porenfläche (Poren > 1 µm) im Verhältnis zur Gesamtfläche ausgewerteter Objekte aufweist,
      - das Pulver eine Schüttdichte von 2 bis zur Dichte der Legierung von ca. 8 g/cm³ hat,
      - das Pulver unter der Schutzgasatmosphäre mit Argon luftdicht verpackt wird.

Vorteilhafterweise soll die Pulverlegierung folgende Zusammensetzung (in Gew.-%) aufweisen:

| | |
|---|---|
| C | max. 0,25 % |
| S | max. 0,03 % |
| N | >0 - 0,15 % |

| | |
|---|---|
| Cr | 17 - 28 %, insbesondere 17 - 24 % |
| Ni | Rest (38 -72 %) |
| Mn | max. 2 %, insbesondere max. 1 % |
| Si | max. 1,2 %, insbesondere ≤ 0,5 % |
| Mo | > 0 - 21, insbesondere 2,5 - 21 % |
| Ti | > 0 - < 3,25 % |
| Nb | > 0 - 5,5 % |
| Cu | max. 3 %, insbesondere bis 0,5 % |
| Fe | > 0 - 38 % |
| P | max. 0,04 % |
| Al | >0 - 0,8 % |
| Mg | max. 0,015 % |
| V | max. 0,4 % |
| Zr | max. 0,1 % |
| W | bis 0,5 % |
| Co | ≤ 10% |
| B | ≤ 0,01 % |
| Pb | max. 0,001%, insbesondere max. 0,0005% |
| Se | max. 0,0005%, insbesondere max. 0,0003% |
| Bi | max. 0,00005%, insbesondere max. 0,00003% |
| O | > 0,00001 - 0,1 % |
| Nb + Ta | >0 - 5,5% |

und herstellungsbedingte Verunreinigungen,
wobei gilt:
   Ni + Fe + Co 57 - 77 %.

Des Weiteren besteht die Möglichkeit die Pulverlegierung für konkrete Anwendungsfälle, wie folgt, zusammenzusetzen:

| | |
|---|---|
| C | >0 - 0,1 %, insbesondere >0 - 0,08% |
| S | max. 0,015 % |
| N | >0 - 0,03 % |
| Cr | 17-24 % |
| Ni | Rest (> 50 - 63 %) |

| | |
|---|---|
| Mn | max. 1,0 %, insbesondere max. 0,5 % |
| Si | max. 0,5 % |
| Mo | 2,8 - 16,5 % |
| Ti | >0 - 1,15 % |
| Nb | > 0 - ≤ 5,5 % |
| Cu | max. 0,5 % |
| Fe | > 0 - 25 % |
| P | max. 0,015 % |
| Al | 0,1 - 0,6 % |
| Mg | max. 0,015 % |
| V | max. 0,2 % |
| Zr | max. 0,1 % |
| W | bis 0,2 % insbesondere >0 - 0,2 % |
| Co | ≤ 2,5 %, insbesondere ≤ 1,0 % |
| B | ≤ 0,01 % |
| Pb | max. 0,001 %, insbesondere max. 0,0005 % |
| Se | max. 0,0005 %, insbesondere max. 0,003 % |
| Bi | max. 0,0005 %, insbesondere max. 0,0003 % |
| O | > 0,00001 - 0,1 % |
| Nb + Ta | >0 - 5,5 % |
| Al + Ti | < 1,2 % |

und herstellungsbedingte Verunreinigungen,
wobei gilt:
   Ni + Fe + Co 59 - 72 %.

Folgende Ausgangsfertigungsschritte sind denkbar:
- ein Vorlegierungsblock mit definierter chemischer Analyse wird durch Erschmelzen im VIM-Ofen, VIM/ESU, VIM/ESU/VAR, VIM/VAR, VOD oder VLF mit bei Bedarf folgender Umschmelzung im ESU und/oder VAR je nach Reinheitsanforderungen an das Material erzeugt,
- ein Vorlegierungs-Block wird durch Sägen in kleine Stücke getrennt.
- die Stücke der Vorlegierung werden in einem VIM-Ofen erschmolzen, oder
- Legierungselemente einer definierten Einwaage werden entsprechend der chemischen Analyse in einem VIM erschmolzen, oder
- die Kombination zwischen Vorlegierungsmaterial, prozessbedingten Schrotten (inkl. Schrotte von Kunden wie recycelte Pulver sowie Stützstrukturen oder fehlerhafte Bauteile) sowie neue Legierungselemente im Verhältnis von 0 bis 100%. Das genaue Verhältnis wird unter Berücksichtigung von qualitativen, ökonomischen und ökologischen Aspekten in jedem Fall betrachtet. Von Vorteil kann sein, wenn der Vorlegierungsblock vor der Zerteilung einer Bearbeitung der Oberfläche (z.B. durch Bürsten, Schleifen, Beizen, Trennen, Schälen etc.) unterzogen wird. Hier können Fehler entfernt werden, welche durch das weitere Umschmelzen nicht beseitigt werden und für spätere Anwendungen von Schaden sein können. Außerdem führt die Verwendung von möglichen Vorlegierungen zum Einhalten von höchsten Qualitätsansprüchen an die chemische Reinheit des Pulvers, die nur durch vorherige Umschmelzprozesse gewährleistet werden können,
- die flüssige Schmelze wird für 5 min bis 2 Stunden zur Homogenisierung gehalten.

An die alternativen Ausgangsfertigungsschritte können sich folgende Weiterverarbeitungsschritte anschließen:
- die geschlossene Verdüsungsanlage wird mit Argongas auf einen Taupunkt von -10°C bis -120°C eingestellt, bevorzugt im Bereich von -30°C bis -100°C,
- die Schmelze wird durch eine Düse in einen Argongasstrom mit einer Gasflussrate von 2qm³/min bis 150 m³/min geblasen,
- die erstarrten Pulverpartikel werden in einem gasdicht verschlossenen Behälter gesammelt,
- die Partikel haben eine Partikelgröße von 5µm bis 250 µm, wobei bevorzugte Bereiche zwischen 5 und 150 µm, bzw. 10 und 150 µm liegen,
- die Partikel des Pulvers sind sphärisch,
- das Pulver weist Gaseinschlüsse von 0,0 bis 4% Porenfläche (Poren > 1 µm) im Verhältnis zur Gesamtfläche ausgewerteter Objekte auf, wobei bevorzugte Bereiche bei 0,0 bis 2% liegen. Die Menge der Gaseinschlüsse des Pulvers ermöglicht eine geringe Restporosität der hergestellten Teile.
- das Pulver hat eine Schüttdichte von 2 bis zur Dichte der Legierung von ca. 8 g/cm³, wobei bevorzugte Bereiche bei Werten von 4 bis 5 g/cm³ liegen,
- das Pulver wird unter einer Schutzgasatmosphäre mit Argon luftdicht verpackt.

Das Pulver wird bevorzugt in einer Vakuuminertgasverdüsungsanlage (VIGA) produziert. In dieser Anlage wird die Legierung in einem Vakuuminduktionsschmelzofen (VIM) erschmolzen, in einen Gießtrichter geleitet, der zu einer Gasdüse führt, in der das erschmolzene Metall unter hohem Druck von 5 bis 100 bar mit Inertgas zu Metallpartikeln verdüst wird. Die Schmelze wird im Schmelztiegel bei 5 bis 400 °C über dem Schmelzpunkt erhitzt. Die Metallflussrate bei der Verdüsung beträgt 0,5 bis 80 kg Imin und die Gasflussrate 2 bis 150 m³ / min. Durch die schnelle Abkühlung erstarren die Metallpartikel in Kugelform (sphärische Teilchen). Das bei der Verdüsung verwendete Inertgas kann bedarfsweise 0,01 bis 100 % Stickstoff enthalten. In einem Zyklon wird dann die Gasphase vom Pulver getrennt und anschließend das Pulver verpackt.

Alternativ kann das Pulver statt über VIGA über das sogenannte EIGA Verfahren hergestellt werden. Dabei wird ein vorgefertigter Legierungsblock in Form einer rotierenden Elektrode von einer Induktionsspule berührungslos abgeschmolzen. Die Schmelze tropft von der Elektrode direkt in den Gasstrom einer Gasdüse.

Der Legierungsblock für EIGA kann wiederum durch die Schmelzverfahren VIM, ESU, VAR, VOD bzw. VLF und deren Kombinationen hergestellt werden und optional Warmformprozesse wie Schmieden und Walzen durchlaufen. Von Vorteil ist eine Säuberung der Oberfläche des Blockes durch eine Behandlung wie Schleifen oder / und Schälen vor dem Einsatz im EIGA Verfahren.

Das Inertgas bei der Pulverherstellung kann wahlweise Argon bzw. ein Gemisch aus Argon mit 0,01 bis 100 % Stickstoff sein. Mögliche Einschränkungen des Stickstoffgehaltes können sein:
0,01 bis 80 %
0,01 bis 50 %
0,01 bis 30 %
0,01 bis 20 %
0,01 bis 10 %
0,01 bis 10 %
0,1 bis 5 %
0,5 bis 10 %
1 bis 5 %
2 bis 3 %

Alternativ kann wahlweise das Inertgas Helium sein.

Das Inertgas kann bevorzugt eine Reinheit von mindestens 99,996 Vol.% haben. Insbesondere soll der Stickstoffgehalt von 0,0 bis 10 ppmv, der Sauerstoffgehalt von 0,0 bis 4 ppmv und einen H2O Gehalt von ≤ 5 ppmv haben.

Insbesondere kann das Inertgas bevorzugt eine Reinheit von mindestens 99,999 Vol.% haben. Insbesondere soll der Stickstoffgehalt von 0,0 bis 5 ppmv, der Sauerstoffgehalt von 0,0 bis 2 ppmv und einen H2O Gehalt von ≤ 3 ppmv haben. Der Taupunkt in der Anlage liegt im Bereich von -10 bis -120°C. Er liegt bevorzugt im Bereich von -30 bis -100°C.

Der Druck bei der Pulververdüsung kann bevorzugt 10 bis 80 bar betragen.

Die mittels additiver Fertigung hergestellten Bauteile und Komponenten bzw. Schichten auf Bauteilen und Komponenten werden aus Schichtdicken von 5 bis 500 µm aufgebaut und haben direkt nach der Herstellung ein texturiertes Gefüge mit in Baurichtung gestreckten Körnern einer mittleren Korngröße von 2 µm bis 1000 µm. Der bevorzugte Bereich liegt zwischen 5 µm und 500 µm.

Die mittels additiver Fertigung hergestellten Bauteile und Komponenten bzw. Schichten auf Bauteilen und Komponenten können wahlweise einer Lösungsglühung im Temperaturbereich von 700°C bis 1250°C für 0,1 min bis 70 h, ggf. unter Schutzgas, wie z. B. Argon oder Wasserstoff, gefolgt von einer Abkühlung an Luft, in der bewegten Glühatmosphäre oder im Wasserbad unterzogen werden. Danach kann wahlweise die Oberfläche durch Beizen, Strahlen, Schleifen, Drehen, Schälen, Fräsen gereinigt oder bearbeitet werden. Eine solche Bearbeitung kann wahlweise teilweise oder ganz auch schon vor der Glühung stattfinden.

Die mittels additiver Fertigung hergestellten Bauteile und Komponenten bzw. Schichten auf Bauteilen und Komponenten können wahlweise einer Homogenisierungs-, Spannungsarm-, Lösungs- und/oder Ausscheidungshärtungsglühung unterzogen werden. Die Wärmebehandlungen können ggfls. unter Schutzgas, wie z. B. Argon oder Wasserstoff, gefolgt von einer Abkühlung im Ofen ggfls. unter Schutzgas, an Luft, in der bewegten Glühatmosphäre oder im Wasserbad unterzogen werden.

Die mittels additiver Fertigung hergestellten Bauteile und Komponenten bzw. Schichten auf Bauteilen und Komponenten haben nach einer Glühung eine mittlere Korngröße von 2 µm bis 2000 µm. Der bevorzugte Bereich liegt zwischen 20 µm und 500 µm.

Die mittels additiver Fertigung aus dem erfindungsgemäß erzeugten Pulver hergestellten Bauteile und Komponenten, bzw. Schichten auf Bauteilen und Komponenten, sollen bevorzugt in Bereichen eingesetzt werden, in denen auch der Werkstoff als Knet- oder Gusslegierung mit verwandter Analyse eingesetzt wird.

Unter additiver Fertigung werden auch Begriffe wie generative Fertigung, Rapid Technology, Rapid Tooling, Rapid Prototyping oder dergleichen verstanden.

Im Allgemeinen unterschieden werden hier:
3D-Druck mit Pulvern,
Selektives Lasersintern und
Selektives Laserschmelzen
Laserauftragsschweißen
Selektives Elektronenstrahlschweißen.

Die hier verwendeten Abkürzungen werden wie folgt definiert:
- VIM: Vacuum Induction Melting
- VIGA: Vacuuminertgasverdüsungsanlage
- VAR: Vacuum Arc Remelting
- VOD: Vaccum Oxygen Decaburization
- VLF: Vaccum Ladle Furnace
- EIGA: Electrode Induction Melting Gas Atomization

Vorteilhafte Weiterbildungen des erfindungsgemäßen Verfahrens sind den Unteransprüchen zu entnehmen.

Der Spreizungsbereich für die Partikelgröße des Pulvers liegt zwischen 5 bis 250 µm, wobei bevorzugte Bereiche zwischen 5 und 150 µm, bzw. 10 und 150 µm, liegen.

Das Pulver hat Gaseinschlüsse von 0,0 bis 4% Porenfläche (Poren > 1 µm) im Verhältnis zur Gesamtfläche ausgewerteter Objekte, wobei bevorzugte Bereiche liegen bei
0,0 bis 2%
0,0 bis 0,5 %
0,0 bis 0,2%
0,0 bis 0,1%
0,0 bis 0,05%

Das Pulver hat eine Schüttdichte von 2 bis zur Dichte der Legierung von ca. 8 g/cm³, wobei bevorzugte Bereiche bei folgenden Werten liegen können.
4-5 g/cm³
2-8 g/cm³
2-7 g/cm³
3-6 g/cm³

Die Menge der Gaseinschlüsse des Pulvers ermöglicht eine geringe Restporosität der hergestellten Teile.

Gegenüber dem Stand der Technik wird auf das Zentrifugenverfahren verzichtet, hierdurch wird die Betriebszeit der Anlage optimiert. Die anschließenden Veredelungsprozesse optimieren die Qualität des Pulvers für die Additive Fertigung.

Von Vorteil kann sein, wenn der Block vor der Zerteilung einer Bearbeitung der Oberfläche (z.B. durch Bürsten, Schleifen, Beizen, Trennen, Schälen etc.) unterzogen wird. Hier können Fehler entfernt werden, welche durch das weitere Umschmelzen nicht beseitigt werden können und für spätere Anwendungen von Schaden sein können.

Das erfindungsgemäße Verfahren lässt sich auf jede Ni- oder Ni-Co-Basislegierung anwenden.

Im Folgenden wird eine Legierungszusammensetzung vorgestellt, die mittels der erfindungsgemäßen Verfahrensparameter als Pulver erzeugt werden kann. Alle Angaben sind in Gew.-%:

| | |
|---|---|
| C | max. 0,5 % |
| S | max. 0,150 %, insbesondere max. 0,03 % |
| Cr | 17-32 %, insbesondere 17 - 26 % |
| Ni | 45-72 %, insbesondere 45 - 71 % |
| Mn | max. 1 % |
| Si | max. 1 % |
| Mo | > 0-10 % |
| Ti | max.3,25 %, insbesondere max. 2,7 % |
| Nb | max. 5,5 % |
| Cu | max. 5 %, insbesondere max. 0,5 % |
| Fe | max. 25 % |
| Al | max. 3,15 %, insbesondere max. 2,5 % |
| V | max. 0,6 % |
| Zr | max. 0,12 %, insbesondere max. 0,1 % |
| Co | max. 28 % |
| O | 0,00001-0,1 % |

und herstellungsbedingte Verunreinigungen.

Darüber hinaus können folgende Elemente gegeben sein (Angaben in Gew.-%):

| | |
|---|---|
| Nb+Ta | max. 6 % |
| B | max. 0,02 %, insbesondere max. 0,006 % |
| Se | max. 0,0005 % |
| Bi | max. 0,00005 % |
| Pb | max. 0,002 % |
| P | max. 0,03 %, insbesondere max. 0,02 % |

Vorteilhaft können nachstehende Elemente wie folgt eingestellt werden (Angaben in Gew.-%):

| | |
|---|---|
| C | 0,015 - 0,5 %; insbesondere 0,015 - 0,2 % |
| S | max. 0,1 %, insbesondere max. 0,02 % |
| Cr | 17-25% |
| Ni | 45-58 % |
| Mn | max. 0,6 % |
| Si | max. 0,4 % |
| Mo | 0-6,1 % |
| Ti | 0,1-2,7 % |
| Al | max. 1,7 % |
| Co | max. 13 % |

Zur Verbesserung der mechanischen Eigenschaften können die Elemente Bor und Kohlenstoff auch wie folgt eingestellt werden:

| | |
|---|---|
| C | 0,015 - 0,5 % |
| B | 0,006 - 0,125 % |

Dabei ist des Weiteren vorteilhaft, wenn die Summe C + B zwischen 0,1875 und 0,530% liegt. zwischen 0,156 und 0,625%, insbesondere im Bereich 0,16 und 0,6% speziell im Bereich 0,1875 und 0,530% liegt und das Verhältnis von C/B zwischen 12 und 18 liegt.

Im Folgenden wird ein Beispiel eines Pulvers aus einer Ni-Legierung auf Basis von Alloy 718 vorgestellt (Angaben in Gew.-%):

| | |
|---|---|
| C | max. 0,08 % |
| S | max. 0,015 % |
| Cr | 17-21 % |
| Ni | 50-55 % |
| Mn | max. 0,35 % |
| Si | max. 0,35 % |
| Mo | 2,8-3,3 % |
| Ti | 0,65-1, 15 % |
| Nb | 4,75-5,5 % |
| Cu | max. 0,3 % |
| Fe | 6-25 % |
| P | max. 0,015 % |
| Al | 0,2-0,8 % |
| Co | max. 1 % |
| B | max. 0,006 % |
| Ta | max. 0,05 % |
| O | 0,00001-0,1 % |
| Pb | max. 0,001 %, insbesondere max. 0,0005 % |
| Se | max. 0,0005 %, insbesondere max. 0,0003 % |
| Bi | max. 0,00005 %, insbesondere max. 0,00003 % |

Alternativ kann diese Legierung auch höhere Ni-Gehalte aufweisen (Angaben in Gew.-%).

| | |
|---|---|
| C | max. 0,1 % |
| S | max. 0,03 %, insbesondere max. 0,02 % |
| Cr | 17-32 %, insbesondere 17 - 30 % |
| Ni | 58-79, insbesondere 58 - 72 % |
| Nb | max. 4,1 %, insbesondere max. 0,6 % |
| Fe | max. 18 % |
| C | max. 0,1 % |
| S | max. 0,02 % |
| Mn | max. 1 % |
| Si | max. 1 % |
| Mo | > 0-10 % |
| Ti | max. 3,25 %, insbesondere max. 2,7 % |
| Cu | max. 0,5 % |
| Al | max. 3,15 % |
| V | max. 0,6 % |
| Zr | max. 0,1 % |
| Co | max. 15%, insbesondere max. 7% |
| O | 0,00001-0,1 % |

sowie ggf. optional (Angaben in Gew.-%):

| | |
|---|---|
| B | max. 0,008 %, insbesondere max. 0,006 % |
| Se | max. 0,0005 % |
| Bi | max. 0,00005 % |
| Pb | max. 0,002 % |
| P | max. 0,03 %, insbesondere max. 0,02 % |

Weitere Einschränkungen sind wie folgt denkbar (Angaben in Gew.-%):

| | |
|---|---|
| C | 0,01-0,04 % |
| Mn | max. 0,5 % |
| Si | max. 0,5 % |
| Cu | max. 0,2 % |

Sowie ggf. optional (Angabe in Gew.-%):

| | |
|---|---|
| Mo | 8-10 % |

Optional kann der Sauerstoffgehalt der erzeugten Legierung bei 0,00001 - 0,1 %, bei 0,0001 - 0,1 %, bei 0,001 - 0,1 %, bei 0,001 - 0,002 % oder bei 0,0015 - 0,002 % liegen.

Optional kann der Sauerstoffgehalt auch wie folgt eingestellt werden:
- 0,00001 - 0,1
- 0,00002 - 0,1
- 0,00005 - 0,1
- 0,00008 - 0,1
- 0,0001 - 0,1
- 0,0002 - 0,1
- 0,0005 - 0,1
- 0,0008 - 0,1
- 0,001 - 0,1
- 0,002 - 0,1
- 0,005 - 0,1
- 0,008 - 0,1
- 0,010 - 0,1
- 0,00001 - 0,10
- 0,00001 - 0,08
- 0,00001 - 0,05
- 0,00001 - 0,03
- 0,00001 - 0,02

Der Stickstoff muss kleiner gleich 0,100 % sein, um die Herstellbarkeit und Verwendbarkeit der Legierung zu gewährleisten. Zu hoher Stickstoffgehalt führt zur Bildung von Nitriden, die Eigenschaften der Legierung negativ beeinflussen. Ein zu niedriger Stickstoff-Gehalt erhöht die Kosten. Der Stickstoff-Gehalt ist deshalb ≥ 0,00001 %. Folgende Einschränkungen des Stickstoffgehalts sind denkbar:
- 0,00001 - 0,1
- 0,00002 - 0,1
- 0,00005 - 0,1
- 0,00008 - 0,1
- 0,0001 - 0,1
- 0,0002 - 0,1
- 0,0005 - 0,1
- 0,0008 - 0,1
- 0,001 - 0,1
- 0,002 - 0,1
- 0,005 - 0,1
- 0,008 - 0,1
- 0,010 - 0,1
- 0,00001 - 0,10
- 0,00001 - 0,08
- 0,00001 - 0,05
- 0,00001 - 0,03
- 0,00001 - 0,02

Sowohl im Pulver als auch in gefertigten Komponenten (3D-gedruckte Proben) ist die Partikelgrößen sowohl von Nitriden als auch von Karbiden und /oder Karbonitriden sehr klein (etwa < 8µm). In einigen Fällen können die oben genannten Partikel nicht vorhanden sein oder erst nach Wärmebehandlung sichtbar werden. Kleine Partikelgrößen von N-haltige Ausscheidungen haben positiven Effekt auf Hochtemperatur Eigenschaften und Wechsellastfestigkeit (Low-cycle Fatigue - LCF), da N-haltigen Ausscheidungen in konventionell hergestellten Legierungen als Rissinitiierungsstellen wirken.

Der Argongehalt muss kleiner gleich 0,08 % sein, um die Herstellbarkeit und Verwendbarkeit der Legierung zu gewährleisten. Argon kann nicht in der y-Matrix aufgelöst werden, deswegen kann es die mechanischen Eigenschaften des Bauteils negativ beeinflussen, da Argoneinschlüsse als Rissinitiierungsstelle wirken können. Ein zu niedriger Argon-Gehalt erhöht die Kosten. Der Argon-Gehalt ist deshalb ≥ 0,0000001 % (≥ 1 ppb). Folgende Einschränkungen des Argongehalts sind denkbar, wobei die Argongehalte aus der Pulverherstellung als auch aus der Bauteilherstellung inbegriffen sind:
- 0,0000001 - 0,05
- 0,0000002 - 0,05
- 0,0000001 - 0,005
- 0,0000001 - 0,002
- 0,0000001 - 0,001

Das erfindungsgemäße Verfahren soll bevorzugt einsetzbar sein für folgende Legierungen:
- Alloy 601
- Alloy 602 CA und dessen Variante MCA
- Alloy 2120 MoN
- Alloy B2
- Alloy C 276
- Crofer 22 APU
- Crofer 22 H

Tabelle 1 zeigt beispielhafte Analysebereiche der vorgenannten Legierungen.

**Tabelle 1**

| | Alloy 601 | Alloy 602 CA / MCA | FM 602 | Alloy 617 (B/OCC) | FM 617 | Alloy 625 | FM 625 | Alloy 690 | Alloy 699XA |
|---|---|---|---|---|---|---|---|---|---|
| C | 0,03-0,1 | 0,15-0,25 | 0,15-0,25 | 0,05-0,08 | 0,05-0,15 | -0,03 | -0,1 | -0,05 | 0,005-0,12 |
| S | -0,015 | -0,01 | | -0,008 | | -0,01 | | -0,015 | -0,01 |
| N | | | | | | | | | -0,05 |
| Cr | 21-25 | 24-26 | 24-26 | 21-23 | 20-24 | 21-23 | 20-23 | 27-31 | 26-30 |
| Ni | 58-63 | 59-66 | 59-66 | 45-58 | 50-61 | 58-71 | 58-71 | 58-66 | 62-72 |
| Mn | -1 | -0,5 | -0,5 | -0,5 | -1 | -0,5 | -0,5 | -0,5 | -0,5 |
| Si | -0,5 | -0,5 | -0,5 | -0,3 | -1 | -0,4 | -0,5 | -0,5 | -0,5 |
| Mo | | | | 8-10 | 8-10 | 8-10 | 8-10 | | |
| Ti | 0,5 | 0,1-0,2 | 0,1-0,2 | 0,25-0,5 | -0,6 | -0,4 | -0,4 | | -0,6 |
| Nb | | | | -0,6 | | | 3-4,1 | | -0,5 |
| Cu | -0,5 | 0,1 | -0,1 | | -0,5 | | -0,5 | -0,5 | -0,5 |
| Fe | -18 | 8-11 | 8-11 | -1,5 | -3 | -5 | -5 | 7-11 | -2,5 |
| P | -0,02 | -0,02 | | -0,012 | -0,03 | -0,01 | | | -0,02 |
| Al | 1-1,7 | 1,8-2,4 | 1,8-2,4 | 0,8-1,3 | 0,8-1,5 | -0,4 | -0,4 | | 2-3 |
| Mg | | | | | | | | | |
| Ca | | | | | | | | | |
| V | | | | -0,6 | | | | | |
| Zr | | 0,01-0,1 | 0,01-0,1 | | | | | | -0,1 |
| W | | | | | -0,5 | | | | |
| Co | | | -1 | 11-13 | 10-15 | -1 | | | |
| B | -0,006 | | | 0,001-0,005 | | | | | -0,008 |
| Ni + Co | | | | | | | | | |
| Nb + Ta | | | 3,2-3,8 | | | 3,2-3,8 | 3,2-3,8 | | |
| Weitere Elemente / additional elements | | | | | | | | | |
| | | | | | | | | | |

- Alloy 617 und dessen Varianten 617 B und 617 OCC
- Alloy 625
- Alloy 690
- Alloy 699XA
- Alloy 718 und dessen Varianten
- Alloy 780
- Alloy 788
- Alloy 80A
- Alloy 81
- Alloy X-750
- Alloy C-263
- Alloy K-500
- Waspaloy
- FM 625
- FM 617 sowie
- FM 602
- Alloy 31
- Alloy 31 Plus
- Alloy 25
- Alloy 28
- Alloy 33
- Alloy 59
- Alloy 188
- Alloy 310 L
- Alloy 330
- Alloy 333
- Alloy 400
- Alloy 600 + 600 L
- Ally 800 + 800 H, HP, L
- Alloy 825 + 825 CTP
- Alloy 925
- Alloy 926

| | Alloy 718 | Alloy 718 CTP | FM 718 | Alloy 780 | Alloy 788 | Waspaloy | Alloy C-263 | Alloy 80A | Alloy 81 |
|---|---|---|---|---|---|---|---|---|---|
| C | -0,08 | -0,045 | -0,08 | -0,1 | 0,04-0,1 | 0,02-0,1 | 0,04-0,08 | 0,04-0,1 | -0,08 |
| S | -0,015 | -0,01 | | -0,015 | -0,01 | -0,03 | -0,007 | -0,015 | -0,02 |
| N | | | | -0,03 | | | | | |
| Cr | 17-21 | 17-21 | 17-21 | 16-20 | 18-21 | 18-21 | 19-21 | 18-21 | 28-32 |
| Ni | 50-55 | 50-55 | 50-55 | 26-62 | 51-69 | 49,6-62,5 | 50-55 | 65-79 | 59-66 |
| Mn | -0,35 | -0,35 | -0,3 | -0,5 | -1 | -1 | -0,6 | -1 | -0,7 |
| Si | -0,35 | -0,35 | -0,3 | -0,3 | -0,5 | -0,75 | -0,4 | -1 | -0,7 |
| Mo | 2,8-3,3 | 2,8-3,3 | 2,8-3,3 | 2-4 | | 3,5-5 | 5,6-6,1 | | -0,5 |
| Ti | 0,65-1,15 | 0,8-1,15 | 0,7-1,1 | 0,1-1 | 1,8-2,7 | 2,75-3,25 | 1,9-2,4 | 1,8-2,7 | 1,5-2,1 |
| Nb | 4,75-5,5 | Nb+Ta | 4,8-5,5 | | | | | | |
| Cu | -0,3 | -0,23 | -0,3 | -0,5 | -0,2 | -0,5 | -0,2 | -0,2 | -0,25 |
| Fe | 6-25 | 12-24 | -24 | -10 | 8-15 | -2 | -0,7 | -1,5 | -1,5 |
| P | -0,015 | -0,01 | -0,015 | -0,03 | -0,02 | -0,03 | -0,015 | | |
| Al | 0,2-0,8 | 0,4-0,6 | 0,2-0,8 | 1-3 | 1-1,8 | 1,2-1,6 | 0,3-0,6 | 1-1,8 | -1,2 |
| Mg | | | | -0,01 | | | | | -1 |
| Ca | | | | -0,01 | | | | | |
| V | | | | | | | | | |
| Zr | | | | -0,05 | | 0,02-0,12 | | | 0,01-0,1 |
| W | | | | | | | | | |
| Co | -1 | -1 | | 15-28 | 3-7 | 12-15 | 19-21 | | Ol. Mrz |
| B | -0,006 | -0,006 | -0,006 | -0,02 | -0,008 | 0,003-0,01 | -0,005 | | -0,006 |
| Ni + Co | | | | | | | | | |
| Nb + Ta | | 4,87-5,2 | | 4-6 | | | | | |
| Weitere Elemente /additional elements | | | | | | | | | |
| | | | | | | | | | |

| C | Alloy K-500 | Alloy X-750 | Alloy 31 Plus^{®} | Alloy 28 | Alloy 31 | Alloy 33 | Alloy 59 | Alloy 188 |
|---|---|---|---|---|---|---|---|---|
| S | -0,18 | -0,08 | ≤ 0.01 | < 0.015 | ≤ 0.015 | ≤ 0.015 | ≤ 0.01 | 0.05 to 0.15 |
| N | -0,01 | -0,01 | ≤ 0.01 | ≤ 0.01 | ≤ 0.01 | ≤ 0.01 | ≤ 0.01 | ≤ 0.015 |
| Cr | | | 0.1 to 0.25 | 0.04 to 0.07 | 0.15 to 0.25 | 0.35 to 0.6 | | |
| Ni | | 14-17 | 26.0 to 27.0 | 26 to 28 | 26 to 28 | 31 to 35 | 22 to 24 | 20 to 24 |
| Mn | 63-70 | 70-77,5 | 33.5 to 35.0 | 30 to 32 | 30 to 32 | 30 to 33 | 57 to 63 | 20 to 24 |
| Si | -1,5 | -1 | 1.0 to 4.0 | ≤ 2 | ≤ 2 | ≤ 2 | ≤ 0.5 | ≤ 1.25 |
| Mo | -0,5 | -0,5 | ≤ 0.10 | ≤ 0.7 | ≤ 0.3 | ≤ 0.5 | ≤ 0.1 | 0.2 to 0.4 |
| Ti | | | 6.0 to 7.0 | 3 to 4 | 6 to 7 | 0.5 to 2 | 15 to 16.5 | |
| Nb | 0,35-0,85 | 2,25-2,75 | | | | | | |
| Cu | | 0,7-1,2 | | | | | | |
| Fe | 27-33 | -0,5 | 0.5 to 1.5 | 1 to 1.4 | 1 to 1.4 | 0.3 to 1.2 | 5 0.5 | |
| P | 0,5-2 | 5-9 | 22.5 to 33.5 | 32 to 40 | 29 to 37 | 26 to 38 | ≤ 1.5 | ≤ 3 |
| Al | -0,02 | | ≤ 0.02 | ≤ 0.02 | ≤ 0.02 | ≤ 0.02 | ≤ 0.015 | ≤ 0.015 |
| Mg | 2,3-3,15 | 0,4-1 | ≤ 0.3 | | | | 0.1 to 0.4 | ≤ 0.2 |
| Ca | | | | | | | | |
| V | | | | | | | | |
| Zr | | | | | | | | |
| W | | | | | | | | |
| Co | | | | | | | | 13 to 16 |
| B | | -1 | | | | | ≤ 0.3 | |
| Ni + Co | | | | | | | | ≤ 0.01 |
| Nb + Ta | | | | | | | | |
| Weitere Elemente / additional elements | | 0,7-1,2 | | | | | | |
| | | | | | | | | |
| | | | | | | | | |

| C | Alloy 310 L | Alloy 330 | Alloy 333 | Alloy 400 | Alloy 600 | Alloy 600 L | Alloy 800 | Alloy 800 H | Alloy 800 HP |
|---|---|---|---|---|---|---|---|---|---|
| S | ≤ 0.02 | ≤ 0.15 | 0.03 to 0.06 | ≤ 0.15 | 0.05 to 0.1 | ≤ 0.025 | ≤ 0.1 | 0.06 to 0.10 | 0.06 to 0.1 |
| N | 5 0.005 | ≤ 0.015 | | ≤ 0.02 | ≤ 0.015 | ≤ 0.01 | ≤ 0.01 | ≤ 0.01 | ≤ 0.01 |
| Cr | | | | | | | | | |
| Ni | 24 to 25 | 15 to 17 | 24 to 26 | | 14 to 17 | 14 to 17 | 19.0 to 21.5 | 19 to 21 | 19 to 22 |
| Mn | 20 to 21 | 33 to 37 | 44 to 47 | ≥ 63 | ≥ 72 | ≥ 72 | 30.0 to 32.0 | 30 to 32 | 30 to 32 |
| Si | ≤ 1 | ≤ 2 | 1.2 to 2 | ≤ 2 | ≤ 1 | ≤ 1 | 0.5 to 1.0 | 0.5 to 1 | 0.5 to 1 |
| Mo | 5 0.15 | 1 to 2 | 0.8 to 1.2 | ≤ 0.5 | ≤ 0.5 | ≤ 0.5 | 0.2 to 0.6 | 0.2 to 0.6 | 0.2 to 0.6 |
| Ti | 5 0.1 | | 2.5 to 3.5 | | | | | | |
| Nb | | | 0.1 to 0.2 | | S 0.3 | ≤ 0.3 | 0.20 to 0.5 | 0.2 to 0.6 | 0.3 to 0.6 |
| Cu | | | | | | | | | |
| Fe | | | ≤ 0.5 | 28 to 34 | ≤ 0.5 | ≤ 0.5 | ≤ 0.5 | ≤ 0.5 | ≤ 0.5 |
| P | | 42 to 51 | 13 to 22 | 1 to 2.5 | 6 to 10 | 6 to 10 | 41 to 47 | 43 to 50 | 43 to 50 |
| Al | ≤ 0.02 | ≤ 0.045 | | | ≤ 0.02 | ≤ 0.015 | 5 0.015 | 5 0.015 | ≤ 0.015 |
| Mg | | | | ≤ 0.5 | ≤ 0.3 | ≤ 0.3 | 0.20 to 0.40 | 0.2 to 0.6 | 0.3 to 0.6 |
| Ca | | | | | | | | | |
| V | | | | | | | | | |
| Zr | | | | | | | | | |
| W | | | | | | | | | |
| Co | | | 2.5 to 3.5 | | | | | | |
| B | | | 2.5 to 3.5 | | | | | | |
| Ni + Co | | | | | | ≤ 0.006 | | | |
| Nb + Ta | | | | | | | | | |
| Weitere Elemente / additional elements | | | | | | | | | |
| | | | | | | | Al + Ti max. 1.0 % | Al + Ti max 0.7% | Al + Ti 0,85% - 1,2 % |
| | | | | | | | | | |

| C | Alloy 800 L | Alloy 825 | Alloy 825 CTP | Alloy 925 | Alloy 926 | Alloy 2120 MoN | Alloy B-2 |
|---|---|---|---|---|---|---|---|
| S | ≤ 0.025 | ≤ 0.025 | ≤ 0.015 | ≤ 0.03 | ≤ 0.020 | ≤ 0.01 | ≤ 0.01 |
| N | ≤ 0.01 | ≤ 0.015 | ≤ 0.005 | ≤ 0.03 | ≤ 0.010 | ≤ 0.01 | ≤ 0.01 |
| Cr | | | ≤ 0.03 | | 0.15 to 0.25 | 0.02 to 0.15 | |
| Ni | 20 to 22 | 19.5 to 23.5 | 21 to 23 | 19.5 to 22.5 | 20.0 to 21.0 | 20.0 to 23.0 | 0.4 to 1 |
| Mn | 32 to 34 | 38 to 46 | 39 to 43 | 42 to 46 | 24.00 to 26.00 | 58 | 64 to 72 |
| Si | 0.5 to 1 | ≤ 1 | 0.5 to 0.9 | ≤ 1 | 51.00 | ≤ 0.50 | ≤ 1 |
| Mo | ≤ 0.7 | ≤ 0.5 | 0.2 to 0.5 | ≤ 0.5 | ≤ 0.50 | ≤ 0.1 | ≤ 0.08 |
| Ti | | 2.5 to 3.5 | 4.5 to 6.5 | 2.5 to 3.5 | 6.0 to 7.0 | 18.5 to 21.0 | 26 to 30 |
| Nb | 0.35 to 0.6 | 0.6 to 1.2 | | 1.9 to 2.4 | | | |
| Cu | | | ≤ 0.15 | ≤ 0.5 | | | |
| Fe | ≤ 0.5 | 1.5 to 3 | 1.6 to 2.3 | 1.5 to 3 | 0.5 to 1.5 | ≤ 0.5 | ≤ 0.5 |
| P | 41 to 47 | 20 to 38 | 20 to 38 | ≥ 22 | | ≤ 1.5 | 1.6 to 2 |
| Al | ≤ 0.015 | ≤ 0.02 | | ≤ 0.03 | ≤ 0.030 | ≤ 0.015 | ≤ 0.02 |
| Mg | 0.15 to 0.4 | ≤ 0.2 | 0.06 to 0.25 | 0.1 to 0.5 | | ≤ 0.4 | |
| Ca | | | 0.006 to 0.015 | | | | |
| v | | | | | | | |
| Zr | | | | | | | |
| W | | | | | | | |
| Co | | | | | | ≤ 0.3 | |
| B | | ≤ 1 | ≤ 0.5 | | | ≤ 0.3 | ≤ 1 |
| Ni + Co | | | 0.002 to 0.004 | | | | |
| Nb + Ta | | | | | | | |
| Weitere Elemente / additional elements | | | | | | | |
| | Al + Ti 1,0 % | | | | | | |
| | | | | | | | |

| C | | Alloy C-263 | Alloy C-276 | Crofer 22 APU | Crofer 22 H | NeutroShield |
|---|---|---|---|---|---|---|
| S | | 0.04 to 0.08 | ≤ 0.01 | ≤ 0.03 | ≤ 0.03 | ≤ 0.08 |
| N | | ≤ 0.007 | ≤ 0.01 | ≤ 0.020 | ≤ 0.006 | ≤ 0.030 |
| Cr | | | | | ≤ 0.04 | ≤ 0.10 |
| Ni | | 19.0 to 21.0 | 15 to 16.5 | 20.0 to 24.0 | 20 to 24 | 18.00 to 20.00 |
| Mn | | 50 to 55 | 51 to 63 | | ≤ 0.5 | 12.00 to 15.00 |
| Si | | ≤ 0.6 | ≤ 1 | 0.30 to 0.80 | ≤ 0.8 | ≤ 2.00 |
| Mo | | ≤ 0.4 | ≤ 0.08 | ≤ 0.50 | 0.1 to 0.6 | |
| Ti | | 5.6 to 6.1 | 15 to 17 | | | |
| Nb | | 1.90 to 2.40 | | 0.03 to 0.20 | 0.02 to 0.2 | |
| Cu | | | | | 0.2 to 1 | |
| Fe | | ≤ 0.2 | | ≤ 0.50 | ≤ 0.5 | |
| P | | ≤ 0.7 | 4 to 7 | ≥ 73 | 70 to 79 | R |
| Al | | ≤ 0.015 | ≤ 0.02 | ≤ 0.050 | ≤ 0.05 | ≤ 0.045 |
| Mg | | 0.30 to 0.60 | | ≤ 0.50 | ≤ 0.1 | |
| Ca | | | | | | |
| V | | | | | | |
| Zr | | | ≤ 0.3 | | | |
| W | | | | | | |
| Co | | | 3 to 4.5 | | 1 to 3 | |
| B | | 19.0 to 21.0 | ≤ 2.5 | | | ≤ 0.2 |
| Ni + Co | | ≤ 0.005 | | | | 0.20 to 2.25 |
| Nb + Ta | | | | | | |
| Weitere Elemente/ additional elements | | | | | | |
| | | Ag: max, 0.0005; Zr: max. 0.02; Al+Ti: 2.40 - 2.80; Ni: Rest. | | | | Si 0.75 % (max) |
| | | Pb, Ag, Zr: Bestimmung nur auf Bestellung. | | | | |

Erzielt werden Pulver mit einer Partikelgröße von 5µm bis 250 µm.

Eine zu kleine Partikelgröße unterhalb von 5 µm verschlechtert das Fließverhalten und ist deshalb zu vermeiden, eine zu große Partikelgröße oberhalb von 250 µm verschlechtert das Verhalten bei der additiven Fertigung.

Eine zu geringe Schüttdichte von 2 g/cm² verschlechtert das Verhalten bei der additiven Fertigung. Die größtmögliche Schüttdichte von ca. 8 g/cm³ ist durch die Dichte der Legierung gegeben.

Der Sauerstoffgehalt muss kleiner gleich 0,100 % sein, um die Herstellbarkeit und Verwendbarkeit der Legierung zu gewährleisten. Ein zu niedriger Sauerstoff-Gehalt erhöht die Kosten. Der Sauerstoff-Gehalt ist deshalb ≥ 0,0001 %. Die nach diesem Verfahren gefertigten Pulver können in der additiven Fertigung zum Bau von Komponenten verwendet werden, welche die Eigenschaften der zugrundeliegenden Legierungen aufweisen.

Außerdem kann oben beschriebenes Pulver auch für die Herstellung der Bauteile mittels heißisostatischen Pressens (HIP) oder herkömmlichen Sinter- und Strangpressprozessen verwendet werden. Außerdem ist die Verfahrenskombination aus additiver Fertigung und folgender HIP Behandlung möglich. Dabei sind die unten beschriebenen für die generative Fertigung Nachbearbeitungsschritte für HIP Bauteile möglich anzuwenden.

Das nach diesem Verfahren gefertigten Pulver als auch aus diesem Pulver gefertigten Komponenten (3D-gedruckte Proben) sind frei von Nitriden als auch von Karbiden und / oder Karbonitrieren. Sollten Nitriden als auch von Karbiden doch vorhanden sein, so haben diese eine Partikelgrößen im Durchmesser von < 100nm insbesondere <50nm.

Nach einer Wärmebehandlung von aus diesem Pulver gefertigten Komponenten (3D-gedruckte Proben) zur Homogenisierung, Diffusionsglühung über 900°C speziell über 1000°C idealerweise über 1100°C für mehr als 1 Stunde können in den gefertigten Komponenten (3D-gedruckte Proben) Nitride als auch von Karbide und /oder Karbonitride auftreten. Diese haben eine Partikelgrößen im Durchmesser von < 8µm, beziehungsweise <5µm, idealerweise < 1µm, insbesondere <500nm.Das erfindungsgemäße Verfahren wird beispielhaft wie folgt erläutert:

Es wurden nachstehende Schmelzen mit dem erfindungsgemäßen Verfahren erzeugt und als Pulver gefertigt (Angaben in Gew.-%):

| Charge | P10030 | P10036 | P10038 | P10039 | P10046 | P10049 | P10057 | P10153 | P10154 | P10155 |
|---|---|---|---|---|---|---|---|---|---|---|
| C | 0,022 | 0,027 | 0,025 | 0,026 | 0,028 | 0,023 | 0,033 | 0,002 | 0,002 | 0,003 |
| S | 0,0005 | 0,0005 | 0,0006 | 0,0005 | 0,0007 | 0,0006 | 0,001 | 0,002 | 0,002 | 0,002 |
| N | 0,007 | 0,008 | 0,006 | 0,008 | 0,005 | 0,008 | 0,007 | 0,004 | 0,004 | 0,003 |
| Cr | 18,33 | 18,38 | 17,94 | 18,35 | 17,94 | 18,95 | 18,56 | 22,46 | 22,48 | 22,72 |
| Ni | 53,07 | 53,24 | 52,33 | 53,24 | 53,32 | 52,2 | 53,44 | 60,91 | 60,71 | 60,5 |
| Mn | 0,04 | 0,03 | 0,18 | 0,1 | 0,03 | 0,11 | 0,03 | 0,2 | 0,19 | 0,18 |
| Si | 0,06 | 0,05 | 0,18 | 0,08 | 0,04 | 0,16 | 0,06 | 0,01 | 0,01 | 0,01 |
| Mo | 2,98 | 3,03 | 2,96 | 3,01 | 3,05 | 3,13 | 2,98 | 15,43 | 15,42 | 15,48 |
| Ti | 0,93 | 0,93 | 1,28 | 0,98 | 0,9 | 0,92 | 0,95 | 0,01 | 0,01 | 0,01 |
| Nb | 5,28 | 5,37 | 5,18 | 5,09 | 5,41 | 5,61 | 5,39 | 0,01 | 0,01 | 0,01 |
| Cu | 0,03 | 0,02 | 0,14 | 0,05 | 0,02 | 0,03 | 0,03 | 0,01 | 0,01 | 0,01 |
| Fe | 18,52 | 18,18 | 17,66 | 18,01 | 18,55 | 17,63 | 17,82 | 0,52 | 0,66 | 0,67 |
| P | 0,009 | 0,008 | 0,039 | 0,013 | 0,007 | 0,011 | 0,007 | 0,002 | 0,002 | 0,002 |
| Al | 0,55 | 0,58 | 0,8 | 0,6 | 0,52 | 0,53 | 0,46 | 0,24 | 0,31 | 0,22 |
| Mg | 0,001 | 0,001 | 0,011 | 0,005 | 0,001 | 0,002 | 0,001 | 0,001 | 0,001 | 0,001 |
| Ca | 0,001 | 0,001 | 0,002 | 0,004 | 0,001 | 0,004 | 0,001 | 0,001 | 0,001 | 0,001 |
| V | 0,02 | 0,02 | 0,18 | 0,06 | 0,02 | 0,13 | 0,02 | 0,16 | 0,15 | 0,15 |
| Zr | 0,01 | 0,01 | 0,05 | 0,05 | 0,01 | 0,03 | 0,01 | - | - | - |
| W | 0,03 | 0,03 | 0,19 | 0,09 | 0,06 | 0,06 | 0,02 | 0,01 | 0,01 | 0,01 |
| Co | 0,1 | 0,08 | 0,84 | 0,22 | 0,07 | 0,44 | 0,08 | 0,01 | 0,01 | 0,01 |
| B | 0,004 | 0,004 | 0,007 | 0,004 | 0,004 | 0,01 | 0,004 | 0,001 | 0,001 | 0,001 |

**Tabelle 2**

| Charge | P10156 | P10157 | P10207 | P10208 | P10209 | P10210 | P10211 | P10212 | P10213 | P10214 | P10215 |
|---|---|---|---|---|---|---|---|---|---|---|---|
| C | 0,003 | 0,002 | 0,002 | 0,002 | 0,002 | 0,002 | 0,002 | 0,002 | 0,003 | 0,002 | 0,002 |
| S | 0,002 | 0,002 | 0,003 | 0,003 | 0,003 | 0,003 | 0,003 | 0,003 | 0,003 | 0,003 | 0,003 |
| N | 0,004 | 0,005 | 0,003 | 0,005 | 0,004 | 0,004 | 0,003 | 0,006 | 0,005 | 0,002 | 0,003 |
| Cr | 22,78 | 22,66 | 22,8 | 22,65 | 22,95 | 22,66 | 22,5 | 22,54 | 22,43 | 22,46 | 22,49 |
| Ni | 60,27 | 60,19 | 60,4 | 60,34 | 60,27 | 60,36 | 60,82 | 60,4 | 61,01 | 60,89 | 60,59 |
| Mn | 0,19 | 0,18 | 0,22 | 0,22 | 0,2 | 0,18 | 0,19 | 0,18 | 0,19 | 0,15 | 0,17 |
| Si | 0,01 | 0,01 | 0,04 | 0,01 | 0,03 | 0,02 | 0,02 | 0,02 | 0,01 | 0,02 | 0,02 |
| Mo | 15,71 | 16,02 | 15,5 | 15,64 | 15,47 | 15,68 | 15,39 | 15,77 | 15,39 | 15,39 | 15,68 |
| Ti | 0,01 | 0,01 | 0,01 | 0,01 | 0,01 | 0,01 | 0,01 | 0,01 | 0,01 | 0,01 | 0,01 |
| Nb | 0,01 | 0,01 | 0,01 | 0,01 | 0,01 | 0,01 | 0,01 | 0,01 | 0,01 | 0,01 | 0,01 |
| Cu | 0,01 | 0,01 | 0,01 | 0,01 | 0,01 | 0,01 | 0,01 | 0,01 | 0,01 | 0,01 | 0,01 |
| Fe | 0,61 | 0,45 | 0,61 | 0,61 | 0,53 | 0,53 | 0,53 | 0,52 | 0,44 | 0,52 | 0,51 |
| P | 0,002 | 0,002 | 0,002 | 0,002 | 0,002 | 0,002 | 0,002 | 0,002 | 0,002 | 0,002 | 0,002 |
| Al | 0,22 | 0,28 | 0,22 | 0,24 | 0,27 | 0,26 | 0,28 | 0,26 | 0,26 | 0,29 | 0,27 |
| Mg | 0,001 | 0,001 | 0,001 | 0,001 | 0,001 | 0,001 | 0,001 | 0,001 | 0,001 | 0,001 | 0,001 |
| Ca | 0,001 | 0,001 | 0,001 | 0,001 | 0,001 | 0,001 | 0,001 | 0,001 | 0,001 | 0,001 | 0,001 |
| V | 0,14 | 0,14 | 0,14 | 0,14 | 0,13 | 0,14 | 0,14 | 0,15 | 0,14 | 0,14 | 0,15 |
| Zr | - | - | - | - | - | - | - | - | - | - | - |
| W | 0,01 | 0,01 | 0,01 | 0,01 | 0,01 | 0,02 | 0,01 | 0,01 | 0,01 | 0,01 | 0,01 |
| Co | 0,01 | 0,01 | 0,01 | 0,08 | 0,09 | 0,1 | 0,07 | 0,09 | 0,06 | 0,08 | 0,06 |
| B | 0,001 | 0,001 | 0,001 | 0,001 | 0,001 | 0,001 | 0,001 | 0,001 | 0,001 | 0,001 | 0,001 |

In Tabelle 2 sind chemische Zusammensetzungen der mit dem erfindungsgemäßen Verfahren hergestellten Pulver angegeben:
Sowohl Pulver als auch in gefertigten Komponenten (3D-gedruckte Proben) waren frei von Nitriden als auch von Karbiden.

Nach einer Glühung bei einer Temperatur von 1100°C für 1 Stunde gefolgt von einer Abschreckung im Wasser waren in gefertigten Komponenten (3D-gedruckte Proben) Partikel wie Nitride als auch Karbide und /oder Karbonitride vorhanden. Diese hatten eine Partikelgrößen im Durchmesser von unter < 1µm.

## Patentansprüche

1. Verfahren zur Herstellung eines Pulvers aus einer Nickel-Basislegierung, wobei die Gehalte (in Gew.-%) wie folgt definiert sind:
| | |
|---|---|
| C | max. 0,5 % |
| S | max. 0,15 %, insbesondere max. 0,03 % |
| N | max. 0,25 % |
| Cr | 14 - 35 %, insbesondere 17 - 28 % |
| Ni | Rest (> 38 %) |
| Mn | max. 4 % |
| Si | max. 1,5 % |
| Mo | > 0 - 22 % |
| Ti | ≤ 4 %, insbesondere ≤ 3,25 % |
| Nb | bis 6,0 % |
| Cu | bis 3 %, insbesondere bis 0,5 % |
| Fe | ≤ 50 % |
| P | max. 0,05 %, insbesondere max. 0,04 % |
| Al | bis 3,15 %, insbesondere bis 2,5 % |
| Mg | max. 0,015 % |
| V | max. 0,6 % |
| Zr | max. 0,12 %, insbesondere max. 0,1 % |
| W | bis 4,5 %, insbesondere bis max. 3 % |
| Co | bis 28 % |
| B | ≤ 0,125% |
| O | > 0,00001 - 0,1 % |
und herstellungsbedingte Verunreinigungen,
wobei gilt:
Ni + Fe + Co 56 - 80 %
Nb + Ta ≤ 6,0 %, , indem
- eine Legierung in einem VIM-Ofen erschmolzen wird,
- die flüssige Schmelze für 5 min bis 2 Stunden zur Homogenisierung gehalten wird,
- eine geschlossene Verdüsungsanlage mit einem zugeführten Gas auf einen Taupunkt von -10°C bis 120°C eingestellt wird,
- die Schmelze durch eine Düse in einen Gasstrom mit einer Gasflussrate von 2 qm³/min bis 150 qm³ geblasen wird,
- die erstarrten Pulverpartikel in einem gasdicht verschlossenen Behälter gesammelt werden, wobei
- die Partikel eine Partikelgröße von 5 µm bis 250 µm haben,
- die Partikel des Pulvers sphärisch sind,
- das Pulver Gaseinschlüsse von 0,0 bis 4 % Porenfläche (Poren > 1 µm) im Verhältnis zur Gesamtfläche ausgewerteter Objekte aufweist,
- das Pulver eine Schüttdichte von 2 bis zur Dichte der Legierung von ca. 8 g/cm³ hat,
- das Pulver unter der Schutzgasatmosphäre mit Argon luftdicht verpackt wird.

2. Verfahren nach Anspruch 1 mit folgender Zusammensetzung (in Gew.-%):
| | |
|---|---|
| C | max. 0,25 % |
| S | max. 0,03 % |
| N | >0 - 0,15 % |
| Cr | 17 - 28 %, insbesondere 17 - 24 % |
| Ni | Rest (38 -72 %) |
| Mn | max. 2 %, insbesondere max. 1 % |
| Si | max. 1,2 %, insbesondere ≤ 0,5 % |
| Mo | > 0 - 21, insbesondere 2,5 - 21 % |
| Ti | > 0 - < 3,25 % |
| Nb | > 0 - 5,5 % |
| Cu | max. 3 %, insbesondere bis 0,5 % |
| Fe | > 0 - 38 % |
| P | max. 0,04 % |
| Al | >0 - 0,8 % |
| Mg | max. 0,015 % |
| V | max. 0,4 % |
| Zr | max. 0,1 % |
| W | bis 0,5 % |
| Co | ≤ 10 % |
| B | ≤ 0,01 % |
| Pb | max. 0,001%, insbesondere max. 0,0005% |
| Se | max. 0,0005%, insbesondere max. 0,0003% |
| Bi | max. 0,00005%, insbesondere max. 0,00003% |
| O | > 0,00001 - 0,1% |
| Nb + Ta | >0 - 5,5% |
und herstellungsbedingte Verunreinigungen,
wobei gilt:
Ni + Fe + Co 57 - 77 %.

3. Verfahren nach Anspruch 1 oder 2 mit folgender Zusammensetzung (in Gew.-%):
| | |
|---|---|
| C | >0 - 0,1 %, insbesondere >0 - 0,08% |
| S | max. 0,015 % |
| N | >0 - 0,03 % |
| Cr | 17 - 24 % |
| Ni | Rest (> 50 - 63 %) |
| Mn | max. 1,0 %, insbesondere max. 0,5 % |
| Si | max. 0,5 % |
| Mo | 2,8 - 16,5 % |
| Ti | >0 - 1,15 % |
| Nb | > 0 - ≤ 5,5 % |
| Cu | max. 0,5 % |
| Fe | > 0 - 25 % |
| P | max. 0,015 % |
| Al | 0,1 - 0,6 % |
| Mg | max. 0,015 % |
| V | max. 0,2 % |
| Zr | max. 0,1 % |
| W | bis 0,2 % insbesondere >0 - 0,2 % |
| Co | ≤ 2,5 %, insbesondere ≤ 1,0 % |
| B | ≤ 0,01 % |
| Pb | max. 0,001 %, insbesondere max. 0,0005 % |
| Se | max. 0,0005 %, insbesondere max. 0,003 % |
| Bi | max. 0,0005 %, insbesondere max. 0,0003 % |
| O | > 0,00001 - 0,1 % |
| Nb + Ta | >0 - 5,5 % |
| Al + Ti | < 1,2 % |
und herstellungsbedingte Verunreinigungen,
wobei gilt:
Ni + Fe + Co 59 - 72 %.

4. Verfahren nach einem der Ansprüche 1 bis 3, wobei die Legierung zunächst als Vorlegierung mit definierter chemischer Analyse durch Erschmelzen im VIM-Ofen, VIM/ESU, VIM/ESU/VAR, VIM/VAR VOD oder VLF mit bei Bedarf folgender Umschmelzung im ESU und/oder VAR erzeugt wird,
- der Vorlegierungsblock durch Sägen in kleine Stücke getrennt wird,
- die Stücke der Vorlegierung in einem VIM-Ofen erschmolzen werden.

5. Verfahren nach einem der Ansprüche 1 bis 4, **dadurch gekennzeichnet, dass** als zugeführtes Gas ein Inertgas eingesetzt wird.

6. Verfahren nach einem der Ansprüche 1 bis 5, **dadurch gekennzeichnet, dass** als zugeführtes Gas Argon eingesetzt wird.

7. Verfahren nach einem der Ansprüche 1 bis 6, **dadurch gekennzeichnet, dass** der Gasstrom in den verdüst wird aus Argon besteht.

8. Verfahren nach einem der Ansprüche 1 bis 7, **dadurch gekennzeichnet, dass** der Gasstrom in den verdüst wird aus Stickstoff besteht.

9. Verfahren nach einem der Ansprüche 1 bis 8, **dadurch gekennzeichnet, dass** der Gasstrom in den verdüst wird aus einem Gemisch aus Stickstoff und Argon besteht.

10. Verfahren nach einem der Ansprüche 1 bis 9, **dadurch gekennzeichnet, dass** die Verdüsung der Schmelze mit 0,5 bis 80 kg/min erfolgt

11. Verwendung eines Pulvers das nach einem Verfahren gemäß einem der Ansprüche 1 bis 10 hergestellt wird für die additive Fertigung von Komponenten oder Bauteilen.

12. Verwendung eines Pulvers, das nach einem Verfahren gemäß einem der Ansprüche 1 bis 10 hergestellt wird, für die additive Fertigung von Schichten auf Komponenten oder Bauteilen.

13. Verwendung eines Pulvers, das nach einem Verfahren gemäß einem der Ansprüche 1 bis 10 hergestellt wird, für die Fertigung von Komponenten von Turbinen.

14. Verwendung eines Pulvers, das nach einem Verfahren gemäß einem der Ansprüche 1 bis 10 hergestellt wird, für die Fertigung von Komponenten für die Öl- und Gas- sowie die Chemische Prozessindustrie.

15. Verwendung eines Pulvers, das nach einem Verfahren gemäß einem der Ansprüche 1 bis 1o hergestellt wird, für die Fertigung von Ventilen oder Flanschen.

## Claims

1. Method for producing a nickel-base alloy powder, wherein the contents (in % by weight) are defined as follows:
| | |
|---|---|
| C | max. 0.5% |
| S | max. 0.15%, in particular max. 0.03% |
| N | max. 0.25% |
| Cr | 14 - 35%, in particular 17 - 28% |
| Ni | remainder (> 38%) |
| Mn | max. 4% |
| Si | max. 1.5% |
| Mo | > 0 - 22% |
| Ti | ≤ 4%, in particular ≤ 3.25% |
| Nb | up to 6.0% |
| Cu | up to 3%, in particular up to 0.5% |
| Fe | ≤ 50% |
| P | max. 0.05%, in particular max. 0.04% |
| Al | up to 3.15%, in particular up to 2.5% |
| Mg | max. 0.015% |
| V | max. 0.6% |
| Zr | max. 0.12%, in particular max. 0.1% |
| W | up to 4.5%, in particular up to max. 3% |
| Co | up to 28% |
| B | ≤ 0.125% |
| O | > 0.00001 - 0.1% |
and production-related impurities,
wherein:
Ni + Fe + Co 56 - 80%
Nb + Ta ≤ 6.0% by
- melting an alloy in a VIM furnace,
- holding the liquid melt from 5 min to 2 hours for homogenisation,
- setting a closed atomisation system with a supplied gas to a dew point from -10 °C to 120 °C,
- blowing the melt through a nozzle into a gas stream with a gas flow rate from 2 qm³/min to 150 qm³,
- collecting the solidified powder particles in a sealed, gas-tight container, wherein
- the particles have a particle size from 5 µm to 250 µm,
- the particles of the powder are spherical,
- the powder has gas inclusions from 0.0 to 4% pore area (pores > 1 µm) as a proportion of the total area of evaluated objects,
- the powder has a bulk density from 2 up to the density of the alloy of approx. 8 g/cm³,
- the powder is packed airtight under the protective gas atmosphere with argon.

2. Method according to Claim 1 with the following composition (in % by weight):
| | |
|---|---|
| C | max. 0.25% |
| S | max. 0.03% |
| N | > 0-0.15% |
| Cr | 17-28%, in particular 17 - 24% |
| Ni | remainder (38 - 72%) |
| Mn | max. 2%, in particular max. 1% |
| Si | max. 1.2%, in particular ≤ 0.5% |
| Mo | > 0 - 21, in particular 2.5-21% |
| Ti | > 0 - < 3.25% |
| Nb | > 0 - 5.5% |
| Cu | max 3%, in particular up to 0.5% |
| Fe | > 0 - 38% |
| P | max. 0.04% |
| Al | > 0 - 0.8% |
| Mg | max. 0.015% |
| V | max. 0.4% |
| Zr | max. 0.1% |
| W | up to 0.5% |
| Co | ≤ 10% |
| B | ≤ 0.01% |
| Pb | max. 0.001%, in particular max. 0.0005% |
| Se | max.0.0005%, in particular max. 0.0003% |
| Bi | max 0.00005%, in particular max. 0.00003% |
| O | > 0.00001 - 0.1% |
| Nb + Ta | > 0 - 5.5% |
and production-related impurities, wherein:
Ni +Fe + Co 57 - 77%.

3. Method according to Claim 1 or 2 with the following composition (in % by weight):
| | |
|---|---|
| C | > 0 - 0.1%, in particular > 0 - 0.08% |
| S | max 0.015% |
| N | > 0 - 0.03% |
| Cr | 17 - 24% |
| Ni | remainder (> 50 - 63%) |
| Mn | max. 1.0%, in particular max. 0.5% |
| Si | max. 0.5% |
| Mo | 2.8 - 16.5% |
| Ti | > 0 - 1.15% |
| Nb | > 0 - ≤ 5.5% |
| Cu | max. 0.5% |
| Fe | > 0 - 25% |
| P | max. 0.015% |
| Al | 0.1 - 0.6% |
| Mg | max. 0.015% |
| V | max. 0.2% |
| Zr | max. 0.1% |
| W | up to 0.2% in particular> > 0 - 0.2% |
| Co | ≤ 2.5%, in particular ≤ 1.0% |
| B | ≤ 0.01% |
| Pb | max. 0.001%, in particular max. 0.0005% |
| Se | max. 0.0005%, in particular max.0.003% |
| Bi | max. 0.0005%, in particular max. 0.0003% |
| O | > 0.00001 - 0.1% |
| Nb + Ta | > 0 - 5.5% |
| Al + Ti | < 1.2% |
and production-related impurities,
wherein:
Ni + Fe + Co 59-72%.

4. Method according to any one of Claims 1 to 3, wherein the alloy is first produced as a master alloy with a defined chemical analysis by melting in the VIM furnace, VIM/ESR, VIM/ESR/VAR, VIM/VAR VOD or VLF, with subsequent remelting in the ESU and/or VAR as necessary,
- the master alloy block is cut into small pieces by sawing,
- the pieces of the master alloy are melted in a VIM furnace.

5. Method according to any one of Claims 1 to 4, **characterized in that** an inert gas is used as the supplied gas.

6. Method according to any one of Claims 1 to 5, **characterized in that** argon is used as the supplied gas.

7. Method according to any one of Claims 1 to 6, **characterized in that** the gas stream into which the melt is atomised consists of argon.

8. Method according to any one of Claims 1 to 7, **characterized in that** the gas stream into which the melt is atomised consists of nitrogen.

9. Method according to any one of Claims 1 to 8, **characterized in that** the gas stream into which the melt is atomised consists of a mixture of nitrogen and argon.

10. Method according to any one of claims 1 to 9, **characterized in that** the atomisation of the melt takes place at a rate of 0.5 to 80 kg/min.

11. Use of a powder produced according to a method according to any one of Claims 1 to 10 for the additive manufacture of components or parts.

12. Use of a powder produced according to a method according to any one of Claims 1 to 10 for the additive manufacture of layers on components or parts.

13. Use of a powder produced according to a method according to any one of Claims 1 to 10 for the manufacture of turbine components.

14. Use of a powder produced according to a method according to any one of Claims 1 to 10 for the manufacture of components for the oil and gas and chemical process industries.

15. Use of a powder produced according to a method according to any one of Claims 1 to 10 for the manufacture of valves or flanges.

## Revendications

1. Procédé de fabrication d'une poudre à base d'un alliage à base de nickel, sachant que les teneurs (en %/poids), sont définies comme suit :
| | |
|---|---|
| C | max. 0,5 % |
| S | max. 0,15 %, en particulier max. 0,03 % |
| N | max. 0,25 % |
| Cr | 14 - 35 %, en particulier 17-28 % |
| Ni | rest (> 38 %) |
| Mn | max. 4 % |
| Si | max. 1,5 % |
| Mo | > 0 - 22 % |
| Ti | ≤ 4 %, en particulier ≤ 3,25 % |
| Nb | jusqu'à 6,0 % |
| Cu | jusqu'à 3 %, en particulier jusqu'à 0,5 % |
| Fe | ≤ 50 % |
| P | max. 0,05 %, en particulier max. 0,04 % |
| Al | jusqu'à 3,15 %, en particulier jusqu'à 2,5 % |
| Mg | max. 0,015 % |
| V | max. 0,6 % |
| Zr | max. 0,12 %, en particulier max. 0,1 % |
| W | jusqu'à 4,5 %, en particulier jusqu'à max. 3 % |
| Co | jusqu'à 28 % |
| B | ≤ 0,125 % |
| O | > 0,00001 - 0,1 % |
et impuretés issues de la fabrication,
sachant que l'on a :
Ni + Fe + Co 56 - 80 %
Nb + Ta ≤ 6,0 %, dans lequel
- un alliage est fondu dans un four à fusion sous vide,
- la matière en fusion liquide est maintenue pendant 5 min. à 2 heures pour homogénéisation,
- une installation d'atomisation fermée avec un gaz introduit est réglée à un point de rosée de - 10° C à - 120° C,
- la matière en fusion est soufflée à travers une buse dans un flux de gaz à un débit de flux gazeux de 2 m³/min à 150 m³,
- les particules de poudre solidifiées sont collectées dans un conteneur fermé étanche au gaz, sachant que
- les particules ont une taille particulaire de 5 µm à 250 µm,
- les particules de poudre sont sphériques,
- 1a poudre comporte des inclusions gazeuses de 0,0 à 4 % de la surface poreuse (pores > 1 µm) par rapport à la surface totale des objets évalués,
- la poudre possède une densité en vrac de 2 jusqu'à la densité de l'alliage d'env. 8 g/cm³,
- la poudre est emballée de façon étanche à l'air sous une atmosphère de gaz protecteur avec de l'argon.

2. Procédé selon la revendication 1 avec la composition suivante (en %/poids) définie comme suit :
| | |
|---|---|
| C | max. 0,25 % |
| S | max. 0,03 % |
| N | > 0 - 0,15 % |
| Cr | 17 - 28 %, en particulier 17-24 % |
| Ni | rest (38 - 72 %) |
| Mn | max. 2 %, en particulier max. 1 % |
| Si | max. 1,2 %, en particulier ≤ 0,5 % |
| Mo | > 0 - 21, en particulier 2,5 - 21 % |
| Ti | > 0 - < 3,25 % |
| Nb | > 0 - 5,5 % |
| Cu | max. 3 %, en particulier jusqu'à 0,5 % |
| Fe | > 0 - 38 % |
| P | max. 0,04 % |
| Al | > 0 - 0,8 % |
| Mg | max. 0,015 % |
| V | max. 0,4 % |
| Zr | max. 0,1 % |
| W | jusqu'à 0,5 % |
| Co | ≤ 10 % |
| B | ≤ 0,01 % |
| Pb | max. 0,001 %, en particulier max. 0,0005 % |
| Se | max. 0,0005 %, en particulier max. 0,0003 % |
| Bi | max. 0,00005 %, en particulier max. 0,00003 % |
| O | > 0,00001 - 0,1 % |
| Nb + Ta | > 0 - 5,5 % |
et impuretés issues de la fabrication,
sachant que l'on a :
Ni + Fe + Co 57 - 77 %.

3. Procédé selon la revendication 1 ou 2 avec la composition suivante (en %/poids) :
| | |
|---|---|
| C | > 0 - 0,1 %, en particulier > 0 - 0,08 % |
| S | max. 0,015 % |
| N | > 0 - 0,03 % |
| Cr | 17 - 24 % |
| Ni | rest (> 50 - 63 %) |
| Mn | max. 1,0 %, en particulier max. 0,5 % |
| Si | max. 0,5 % |
| Mo | 2,8 - 16,5 % |
| Ti | > 0 - 1,15 % |
| Nb | > 0 - ≤ 5,5 % |
| Cu | max. 0,5 % |
| Fe | > 0 - 25 % |
| P | max. 0,015 % |
| Al | 0,1 - 0,6 % |
| Mg | max. 0,015 % |
| V | max. 0,2 % |
| Zr | max. 0,1 % |
| W | jusqu'à 0,2 %, en particulier > 0 - 0,2 % |
| Co | ≤ 2,5 %, en particulier ≤ 1,0 % % |
| B | ≤ 0,01 % |
| Pb | max. 0,001 %, en particulier max. 0,0005 % |
| Se | max. 0,0005 %, en particulier max. 0,003 % |
| Bi | max. 0,0005 %, en particulier max. 0,0003 % |
| O | > 0,00001 - 0,1 % |
| Nb + Ta | > 0 - 5,5 % |
| Al + Ti | < 1,2 % |
et impuretés issues de la fabrication,
sachant que l'on a :
Ni + Fe + Co 59 - 72 %.

4. Procédé selon l'une quelconque des revendications 1 à 3, sachant que l'alliage est produit d'abord sous la forme de préalliage avec une analyse chimique définie par fusion dans un four de fusion par induction sous vide (VIM), un four de fusion par induction sous vide/unité de refusion sous laitier électrolytique (VIM/ESU), un four de fusion par induction sous vide/de refusion sous laitier électrolytique/refusion à l'arc sous vide (VIM/ESU/VAR), un four de fusion par induction sous vide/de refusion à l'arc sous vide/décarburation sous vide à l'oxygène (VIM/VAR/VOD) ou un four-poche sous vide (VLF) avec refusion suivante si nécessaire dans une unité de refusion sous laitier électrolytique (ESU) et/ou four de refusion à l'arc sous vide (VAR),
- le bloc de préalliage est séparé en petits morceaux par sciage,
- les morceaux du préalliage sont fondus dans un four par induction sous vide (VIM).

5. Procédé selon l'une quelconque des revendications 1 à 4, **caractérisé en ce qu'**un gaz inerte est introduit sous la forme de gaz apporté.

6. Procédé selon l'une quelconque des revendications 1 à 5, **caractérisé en ce que** le gaz introduit sous la forme de gaz apporté est de l'argon.

7. Procédé selon l'une quelconque des revendications 1 à 6, **caractérisé en ce que** le flux gazeux dans lequel on atomise, est de l'argon.

8. Procédé selon l'une quelconque des revendications 1 à 7, **caractérisé en ce que** le flux gazeux dans lequel on atomise, est de l'azote.

9. Procédé selon l'une quelconque des revendications 1 à 8, **caractérisé en ce que** le flux gazeux, dans lequel on atomise, est un mélange d'azote et d'argon.

10. Procédé selon l'une quelconque des revendications 1 à 9, **caractérisé en ce que** l'atomisation de la matière en fusion a lieu avec 0,5 à 80 kg/min.

11. Utilisation d'une poudre, qui est fabriquée selon un procédé selon l'une quelconque des revendications 1 à 10, fabriquée pour la fabrication additive de composants ou d'éléments de construction.

12. Utilisation d'une poudre, qui est fabriquée selon un procédé selon l'une quelconque des revendications 1 à 10, pour la fabrication additive de couches sur des composants ou éléments de construction.

13. Utilisation d'une poudre, qui est fabriquée selon un procédé selon l'une quelconque des revendications 1 à 10 pour la fabrication de composants de turbines.

14. Utilisation d'une poudre, qui est fabriquée selon un procédé selon l'une quelconque des revendications 1 à 10 pour la fabrication de composants pour l'industrie du pétrole et du gaz ainsi que pour l'industrie chimique de transformation.

15. Utilisation d'une poudre, qui est fabriquée selon un procédé selon l'une quelconque des revendications 1 à 10 pour la fabrication de soupapes ou de brides.
